# FASCICULE DE BREVET EUROPEEN

(11) **EP 3 037 775 B1**
(45) Date de publication et mention de la délivrance du brevet: **13.09.2017**
(21) Numéro de dépôt: 15201512.9
(22) Date de dépôt: 21.12.2015
(51) Int. Cl.: G01B 3/40

(54) **DISPOSITIF ET METHODE DE CONTROLE D'UN ELEMENT FILETE EXTERIEUREMENT**
VORRICHTUNG UND METHODE ZUR KONTROLLE EINES ELEMENTS MIT AUSSENGEWINDE
DEVICE AND METHOD FOR INSPECTING AN ELEMENT THREADED ON THE OUTSIDE

(30) Priorité: 22.12.2014 FR 1463173
(43) Date de publication de la demande: 29.06.2016
(73) Titulaire: Tri Qualité Service, 74970 Marignier (FR)
(72) Inventeur: LOZES, Pierre, 74130 MONT-SAXONNEX (FR)
(74) Mandataire: Cabinet Poncet

(56) Documents cités:
- WO-A1-96/12158
- GB-A- 102 573
- US-A- 5 276 971

## Description

La présente invention concerne le contrôle d'un élément fileté, et concerne plus particulièrement un dispositif de contrôle d'un élément fileté extérieurement tel qu'une vis.

Il y a parfois besoin de contrôler chaque élément fileté extérieurement tel qu'une vis avant son utilisation dans un assemblage, en contrôlant notamment la géométrie de son filetage. Le but est de s'assurer que l'élément fileté extérieurement pourra ultérieurement être utilisé convenablement pour une fixation par vissage. Ceci est d'autant plus important dans le cas où l'élément fileté est destiné, dans un premier temps, à être rendu inséparable (par soudure ou sertissage par exemple) d'un premier sous-ensemble, ledit élément fileté étant ensuite utilisé, dans un deuxième temps, pour solidariser par vissage le premier sous-ensemble à un deuxième sous-ensemble. Dans le cas où on s'aperçoit du caractère défectueux du filetage extérieur seulement lors de l'assemblage par vissage des premier et deuxième sous-ensembles, on doit alors mettre le premier sous-ensemble au rebut définitif ou temporaire (avant une opération de reprise visant à remplacer l'élément fileté défectueux), ce qui induit une perte de temps et de productivité importante. Ceci est d'autant plus critique qu'il est généralement utilisé une pluralité d'éléments filetés sur un même premier sous-ensemble en vue de solidariser ledit premier sous-ensemble à un ou plusieurs autres sous-ensembles.

Pour contrôler la géométrie du filetage d'un élément fileté extérieurement, on a déjà utilisé un dispositif mettant en rotation l'élément fileté autour de la direction longitudinale d'allongement de sa partie filetée, et observant à l'aide d'une caméra le profil du filetage en rotation.

Un tel contrôle est difficile à mettre en oeuvre et à automatiser pour un contrôle systématique unitaire de tous les éléments filetés d'un lot.

Par ailleurs, si un tel contrôle est bien adapté pour repérer d'éventuelles déformations du filetage occasionnées par un choc sur les sommets du filetage, il est toutefois inadapté pour détecter d'éventuels dépôts présents en fond de filetage et pouvant augmenter dramatiquement le couple de vissage (grippage), voire empêcher tout vissage.

Il y a donc eu besoin d'un contrôle plus proche des conditions réelles d'utilisation de l'élément fileté.

Pour ce faire, on a déjà utilisé un contrôle par vissage puis dévissage de l'élément fileté à contrôler dans un trou fileté « étalon ».

Un inconvénient d'un tel contrôle est qu'il est long. Ce contrôle débute en effet par l'introduction par vissage d'une extrémité libre de l'élément fileté dans le trou fileté. Puis on poursuit la pénétration par vissage de l'élément fileté selon toute sa longueur filetée dans le trou fileté pendant une première période de temps. Enfin, après que toute la longueur filetée de l'élément fileté ait été engagée dans le trou fileté (et ait donc été contrôlée), il faut procéder à un dévissage durant une deuxième période de temps sensiblement égale en durée à la première période de temps.

Un autre inconvénient d'un tel contrôle est que la portion filetée située à l'extrémité libre de l'élément fileté parcourt un trajet de vissage/dévissage plus long que les portions filetées situées à l'écart de ladite extrémité libre. Il peut en résulter une usure prématurée et localisée des filets au voisinage de l'extrémité libre. Cette usure peut se présenter sous la forme d'une dégradation de la géométrie des filets et donc affecter la vissabilité de l'élément fileté lors de son utilisation ultérieure après contrôle. En alternative ou en complément, cette usure peut se présenter sous la forme d'une dégradation de l'état de surface ou du revêtement (par échauffement et/ou abrasion) dont peut être revêtue la surface des filets. Un tel revêtement est souvent utilisé à des fins de protection pour une utilisation dans des conditions environnementales agressives (milieu humide et/ou salin). La détérioration du revêtement peut conduire à une détérioration prématurée des caractéristiques mécaniques de l'élément fileté et à une défaillance critique de l'assemblage. Une détérioration de la portion filetée située à l'extrémité libre de l'élément fileté est d'autant plus dommageable que c'est cette portion qui sert à mettre en tension l'élément fileté en fin de vissage.

Les documents US 5,276,971 A et WO 96/12158 A1 décrivent des dispositifs permettant de mesurer le diamètre primitif d'une pièce conique filetée intérieurement ou extérieurement. Les mors de ces dispositifs viennent au contact de la pièce filetée selon deux génératrices diamétralement opposées et ne peuvent donc pas contrôler de façon satisfaisante une vis au plus proche de ses conditions réelles d'utilisation. Les mors n'ont par ailleurs aucune position de fermeture prédéterminée entre eux dès lors qu'il est nécessaire de les rapprocher au plus (ou de les écarter au plus) pour venir au contact de la pièce filetée afin d'en mesurer la valeur du diamètre fileté.

Le document GB 102,573 A permet de contrôler la conformité de vis et tiges filetées (page 1 ligne 5) dans certaines limites. Ce dispositif présente un risque de contrôles erronés pouvant mener à ce que des pièces défectueuses soient considérées conformes.

Un problème proposé par la présente invention est de concevoir des moyens de contrôle d'un élément fileté extérieurement tel qu'une vis, permettant un contrôle unitaire rapide et fiable, au plus proche de conditions réelles d'utilisation, et en limitant efficacement les risques de détériorations potentielles de l'élément fileté.

Pour atteindre ces objets, selon la présente invention, il est proposé un dispositif de contrôle d'un élément fileté extérieurement tel qu'une vis, comportant un logement débouchant à filetage intérieur sensiblement cylindrique apte à recevoir par vissage et retenir ledit élément fileté extérieurement à contrôler présentant un filetage extérieur prédéfini ; selon l'invention :
- le dispositif de contrôle comporte au moins deux mors s'étendant entre une extrémité proximale et une extrémité distale, et comportant chacun une portion angulaire d'empreinte filetée cylindrique intérieure dont les paramètres de filetage intérieur sont en correspondance des paramètres de filetage dudit filetage extérieur prédéfini,
- lesdites portions angulaires d'empreinte filetée cylindrique sont ménagées sur une face de travail respective des mors, s'étendent entre les extrémités proximale et distale respectives des mors, et débouchent sur une face proximale respective des mors,
- les mors sont déplaçables entre une position de fermeture et une position d'ouverture,
- en position de fermeture, les mors sont disposés de façon à former entre eux, par complémentarité de leurs portions angulaires d'empreinte filetée respectives, ledit logement débouchant fileté intérieurement sensiblement cylindrique,
- en position d'ouverture, les mors sont disposés de façon à permettre l'introduction entre leurs portions angulaires d'empreinte filetée respectives, par un simple mouvement de translation, d'un élément cylindrique comportant un diamètre extérieur égal à celui dudit filetage extérieur prédéfini,
caractérisé en ce que le dispositif de contrôle comporte des moyens de capteur configurés pour fournir une information de fermeture lorsque les mors sont en position de fermeture. Lorsque les mors sont en position d'ouverture, on peut introduire un élément fileté à contrôler entre eux de façon à ce que, lorsque les mors sont amenés en position de fermeture, l'élément fileté s'engage simultanément, selon une partie importante (voire la totalité) de son filetage, dans les portions angulaires d'empreinte filetée cylindrique ménagées sur les différents mors. On évite ainsi de procéder à une opération de vissage puis dévissage commençant par l'introduction de la portion filetée située à l'extrémité libre de l'élément fileté dans un trou fileté.

Si en venant en prise sur l'élément fileté les mors parviennent jusqu'à leur position de fermeture, alors on en déduit que la géométrie de la partie de filetage prise entre les mors est a priori satisfaisante.

Dans le cas où le contrôle implique une mise en rotation de l'élément fileté entre les mors pour contrôler le couple de vissage ou de dévissage, l'élément fileté est alors vissé (ou dévissé) dans un logement débouchant fileté intérieurement sensiblement cylindrique. L'élément fileté est donc contrôlé de façon plus proche des conditions réelles que dans le cas où des mors viennent au contact de la pièce filetée seulement selon deux génératrices diamétralement opposées.

De préférence, par mesure de simplicité, le dispositif de contrôle peut comporter seulement un premier et un second mors, chaque mors comportant une portion angulaire d'empreinte filetée cylindrique d'au plus la moitié d'un filetage cylindrique, ménagée sur une face de travail des premier et second mors.

Dans un premier mode de réalisation de l'invention, le dispositif de contrôle peut comporter des moyens de guidage à pivotement des mors entre eux, autorisant un déplacement des mors les uns par rapport aux autres par un ou plusieurs mouvements de pivotement. Un avantage est qu'une liaison pivot est un guidage permettant une grande précision de positionnement relatif entre les différents mors en position de fermeture.

En alternative, dans un deuxième mode de réalisation de l'invention, le dispositif de contrôle peut comporter des moyens de guidage à coulissement des mors entre eux, autorisant un déplacement des mors les uns par rapport aux autres par un ou plusieurs mouvements de translation. Des mouvements relatifs de translation peuvent en effet s'avérer plus simples à automatiser, tout en conservant une précision satisfaisante.

Avantageusement, les moyens de guidage peuvent être situés au voisinage des extrémités distales des mors, à l'écart des faces proximales des mors, au-delà des portions angulaires d'empreinte filetée cylindrique portées par les mors. Une telle position des moyens de guidage par rapport aux portions angulaires d'empreinte filetée cylindrique évite que l'élément fileté vienne en conflit avec les moyens de guidage lorsque l'élément fileté est introduit latéralement entre les mors.

De préférence, le dispositif de contrôle peut comporter des moyens de convoyage permettant d'introduire un élément fileté extérieurement entre les faces de travail des mors. On peut ainsi amener successivement les uns à la suite des autres et de façon automatisée les éléments filetés à contrôler entre les mors, pour un contrôle en grande quantité.

Avantageusement, les moyens de convoyage peuvent comprendre un plateau à rebord muni d'encoches sensiblement semi-circulaires débouchant sur le rebord du plateau. Les éléments filetés peuvent ainsi être contenus dans les encoches sensiblement semi-circulaires pour être amenés avec une orientation précise et dans une position précise entre les mors.

De préférence, on peut prévoir que :
- le plateau est sensiblement circulaire,
- le plateau est entraîné en rotation par des moyens d'entraînement à indexation.

Le plateau est ainsi utilisé à la façon d'un barillet pour amener une succession d'éléments filetés entre les mors pour les contrôler. De tels moyens de convoyage présentent l'avantage d'être à la fois simples et compacts.

Il est à craindre que, de façon aléatoire, l'élément fileté tenu par les moyens de convoyage entre les mors avant leur fermeture ait ses sommets de filetage sensiblement situés en correspondance des sommets du filetage du logement débouchant fileté intérieurement sensiblement cylindrique formé par les mors. Une fermeture des mors sur l'élément fileté pourrait alors endommager le filet de l'élément fileté et/ou du logement débouchant fileté intérieurement sensiblement cylindrique formé par les mors. Pour limiter ces risques d'endommagement, on peut de préférence prévoir que les mors sont déplaçables en translation selon une direction axiale vers les moyens de convoyage, à l'encontre de premiers moyens élastiques de rappel. Les mors peuvent ainsi automatiquement se déplacer vers les moyens de convoyage lors de leur fermeture par rapport à l'élément fileté tenu par les moyens de convoyage des mors. Un tel déplacement autorise les sommets de filetage de l'élément fileté à venir en correspondance des creux du filetage du logement débouchant fileté intérieurement sensiblement cylindrique formé par les mors.

En alternative ou en complément, on peut prévoir que les mors sont déplaçables en translation selon une direction axiale à l'écart des moyens de convoyage, à l'encontre de deuxièmes moyens élastiques de rappel.

De préférence, le dispositif de contrôle peut comprendre des moyens de pré-centrage de l'élément fileté extérieurement à contrôler par rapport aux portions angulaires d'empreinte filetée cylindrique portées par les mors, permettant de placer l'élément fileté extérieurement à contrôler en correspondance des portions angulaires d'empreinte filetée cylindrique avant que les mors ne parviennent en position de fermeture.

De tels moyens de pré-centrage permettent de limiter efficacement les risques de détérioration du filetage de l'élément fileté à contrôler et/ou du logement débouchant fileté intérieurement sensiblement cylindrique formé par les mors dans le cas où l'élément fileté à contrôler ne se trouverait pas en correspondance exacte radialement par rapport aux portions angulaires d'empreinte filetée cylindrique.

Avantageusement, on peut prévoir que :
- les moyens de pré-centrage comprennent, sur chacune des faces proximales respectives des mors, une pièce de centrage à extrémité distale munie d'une encoche en V,
- chaque pièce de centrage est déplaçable à coulissement sur le mors correspondant, selon une direction perpendiculaire à la face de travail du mors correspondant, entre une position d'attente et une position de retrait,
- en position d'attente, la pièce de centrage dépasse au-delà de la face de travail du mors correspondant, de sorte que son extrémité distale est située à une première distance de la face de travail du mors,
- en position de retrait, l'extrémité distale de la pièce de centrage est sensiblement située dans le plan de la face de travail du mors,
- la pièce de centrage est rappelée en permanence vers sa position d'attente par des troisièmes moyens élastiques de rappel.

De tels moyens de pré-centrage sont simples à fabriquer et peu encombrants.

Toujours pour limiter les risques d'endommager le filetage de l'élément fileté lors de la fermeture des mors si les portions d'empreinte filetée respectives des mors ne sont pas en exacte correspondance de l'élément fileté, chaque mors peut comporter des chanfreins reliant les bords longitudinaux de la portion angulaire d'empreinte filetée à la face de travail dudit mors.

De préférence, pour automatiser les opérations de contrôle, le dispositif de contrôle peut comporter des moyens d'actionnement permettant de déplacer les mors depuis leur position de fermeture vers leur position d'ouverture et/ou permettant de déplacer les mors depuis leur position d'ouverture vers leur position de fermeture. Les moyens de capteur permettent de limiter efficacement le risque que des pièces défectueuses soient considérées conformes, comme c'est le cas avec le dispositif du document GB 102,573 A. Avec le dispositif de ce document GB 102,573 A, il est en effet possible qu'une impureté se trouve prise entre les mors de la pince et empêche leur parfaite fermeture. Une vis défectueuse (de diamètre primitif trop grand ou de filetage à diamètre extérieur trop grand par exemple) pourra ainsi au cours du contrôle se déplacer librement (c'est-à-dire se visser normalement, sans grippage) dans l'empreinte dans laquelle elle est introduite, alors qu'elle aurait dû être fermement « mordue » entre les mors et donc être mise au rebut. Ceci est particulièrement important dans le cas où on souhaite à l'issue d'un contrôle ne retenir que des éléments filetés conformes à 100%.

Pour limiter une dégradation des conditions de contrôle au fur et à mesure que de très nombreux éléments filetés sont contrôlés, le dispositif de contrôle peut de préférence comporter des moyens de nettoyage des portions angulaires d'empreinte filetée cylindrique, de préférence par brossage et/ou aspiration et/ou projection d'un fluide.

Avantageusement, le dispositif de contrôle peut comporter des moyens de vissage et/ou dévissage situés en correspondance du logement débouchant fileté intérieurement sensiblement cylindrique lorsque les mors sont en position de fermeture. Les moyens de vissage permettent ainsi de visser et/ou dévisser l'élément fileté en prise entre les mors, pour contrôler son bon fonctionnement.

Selon la présente invention, il est proposé aussi un procédé de contrôle d'un élément fileté extérieurement tel qu'une vis à filetage extérieur prédéfini ; selon l'invention, le procédé de contrôle comporte les étapes successives suivantes :
a) fournir un dispositif de contrôle d'un élément fileté extérieurement tel qu'une vis à filetage extérieur prédéfini, dans lequel :
   - au moins deux mors s'étendent entre une extrémité proximale et une extrémité distale, et comportent chacun une portion angulaire d'empreinte filetée cylindrique intérieure dont les paramètres de filetage intérieur sont en correspondance des paramètres de filetage dudit filetage extérieur prédéfini,
   - lesdites portions angulaires d'empreinte filetée cylindrique sont ménagées sur une face de travail respective des mors et débouchent sur une face proximale respective des mors,
   - les mors sont déplaçables entre une position de fermeture et une position d'ouverture,
   - en position de fermeture, les mors sont disposés de façon à former entre eux, par complémentarité de leurs portions angulaires d'empreinte filetée respectives, un logement débouchant fileté intérieurement sensiblement cylindrique apte à recevoir par vissage et retenir un élément fileté extérieurement à contrôler comportant un diamètre extérieur égal audit diamètre prédéfini,
   - en position d'ouverture, les mors sont disposés de façon à permettre l'introduction, entre leurs portions angulaires d'empreinte filetée respectives, d'un élément cylindrique comportant un diamètre extérieur égal à celui dudit filetage extérieur prédéfini,
   - des moyens de capteur configurés pour fournir une information de fermeture lorsque les mors sont en position de fermeture,
b) disposer les mors en position d'ouverture,
c) introduire un élément fileté extérieurement entre les mors, sensiblement en correspondance des portions angulaires d'empreinte filetée cylindrique des mors,
d) déplacer les mors vers leur position de fermeture, de façon à ce que l'élément fileté extérieurement se trouve en prise dans les portions angulaires d'empreinte filetée cylindrique des mors,
e) si les moyens de capteur fournissent l'information selon laquelle les mors sont dans leur position de fermeture, appliquer un couple de vissage ou dévissage à l'élément fileté extérieurement pris entre les mors.

Un tel procédé permet un contrôle unitaire rapide et fiable, au plus proche de conditions réelles d'utilisation, en limitant efficacement les risques de détériorations potentielles de l'élément fileté. Les opérations de vissage et dévissage peuvent n'être effectuées que sur quelques tours, voire sur une fraction de tour, ce qui rend possible le contrôle horaire d'un très grand nombre d'éléments filetés. On évite en outre de solliciter inutilement le filetage de l'élément fileté extérieurement, et on limite le risque de dégrader un éventuel revêtement.

De préférence, lors de l'étape d), on peut procéder à un pré-centrage de l'élément fileté extérieurement à contrôler par rapport aux portions angulaires d'empreinte filetée cylindrique portées par les mors, de façon à placer l'élément fileté extérieurement à contrôler en correspondance des portions angulaires d'empreinte filetée cylindrique avant que les mors ne parviennent en position de fermeture. En vérifiant que les mors sont en position de fermeture par des moyens de capteur permettant de fournir une information de fermeture lorsque les mors sont effectivement en position de fermeture, on est certain que le couple de vissage ou dévissage sera appliqué lors de l'étape e) dans un logement débouchant fileté intérieurement sensiblement cylindrique comportant un diamètre extérieur égal audit diamètre prédéfini, donc au plus proche des conditions d'utilisations réelles. De tels moyens de capteur permettent de limiter efficacement le risque que des pièces défectueuses soient considérées conformes, par exemple lorsqu'une impureté se trouve prise entre les mors de la pince, empêche leur parfaite fermeture et fausse donc les résultats d'un contrôle de couple.

De préférence, lors de l'étape e), on peut appliquer un couple de dévissage. On limite ainsi efficacement les risques de conflit entre une portion de dimensions transversales plus grandes que les dimensions transversales de la portion filetée de l'élément fileté (une tête de vis par exemple) avec un élément constitutif du dispositif de contrôle.

Avantageusement, lors de l'étape e), après l'application du couple de dévissage, on peut appliquer un couple de vissage à l'élément fileté extérieurement. On teste ainsi le comportement dans les deux sens de manoeuvre de l'élément fileté, ce qui est important quand la liaison vissée, qui sera réalisée à l'aide de l'élément fileté, est sollicitée dans les deux sens lors de l'utilisation prévue.

De préférence, lors de l'étape e), on peut comparer le couple de vissage appliqué à un couple de vissage prédéterminé, et/ou on peut comparer le couple de dévissage appliqué à un couple de dévissage prédéterminé. L'adéquation au vissage et/ou dévissage à un couple d'entraînement prédéterminé est importante lorsque des moyens de vissage ou dévissage doivent être utilisés ultérieurement avec des moyens de vissage et/ou dévissage à limiteur de couple ou à couple limité.

Avantageusement, entre les contrôles successifs de deux éléments filetés extérieurement, on peut nettoyer les portions angulaires d'empreinte filetée cylindrique.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un premier mode de réalisation de dispositif de contrôle selon l'invention ;
- la figure 2 est une vue de côté et en coupe du dispositif de contrôle de la figure 1, avec des mors en position d'ouverture ;
- la figure 3 est une vue de côté et en coupe du dispositif de contrôle de la figure 1, avec les mors en cours de fermeture ;
- la figure 4 est une vue de côté et en coupe du dispositif de contrôle de la figure 1, avec les mors en position de fermeture ;
- la figure 5 est une vue de détails et en perspective du dispositif de contrôle de la figure 1 ;
- la figure 6 est une vue en perspective d'un deuxième mode de réalisation de dispositif de contrôle selon l'invention ;
- la figure 7 est une vue de côté et en coupe du dispositif de contrôle de la figure 6, avec des mors en position d'ouverture ;
- la figure 8 est une vue de côté et en coupe du dispositif de contrôle de la figure 6, avec les mors en cours de fermeture ;
- la figure 9 est une vue de côté et en coupe du dispositif de contrôle de la figure 6, avec les mors en position de fermeture ;
- la figure 10 est une vue de dessus des mors d'un dispositif de contrôle selon un troisième mode de réalisation de l'invention, lesdits mors étant en position de fermeture ; et
- la figure 11 est une vue de dessus des mors du dispositif de contrôle de la figure 10, lesdits mors étant en position d'ouverture.

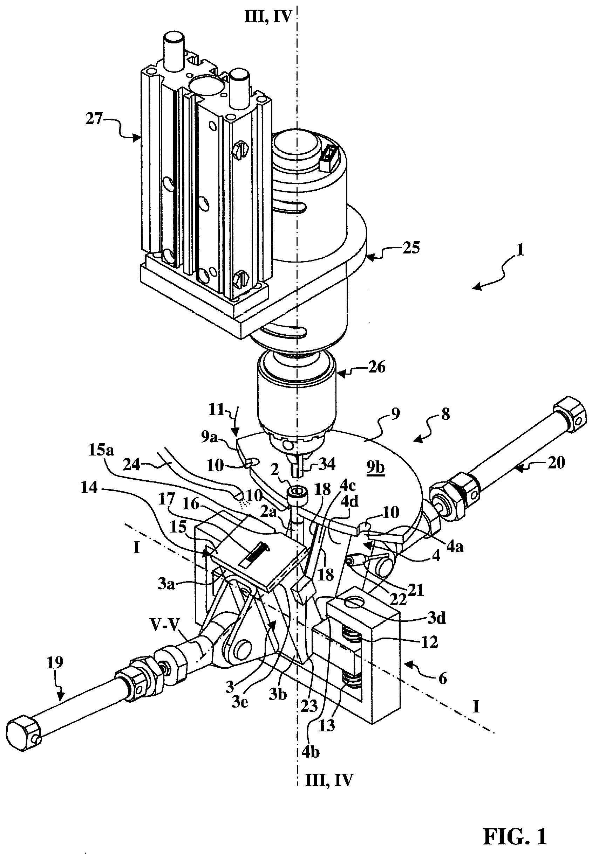

Sur les figures 1 à 5, 6 à 9 et 10 et 11 sont respectivement illustrés trois modes de réalisation particuliers de dispositif de contrôle 1 selon l'invention, permettant de contrôler le filetage d'un élément fileté extérieurement tel qu'une vis 2 présentant un filetage extérieur prédéfini, c'est-à-dire un filetage extérieur dont les paramètres (diamètre, hauteur de filet, profil transversal de filet, pas, etc.) sont prédéfinis.

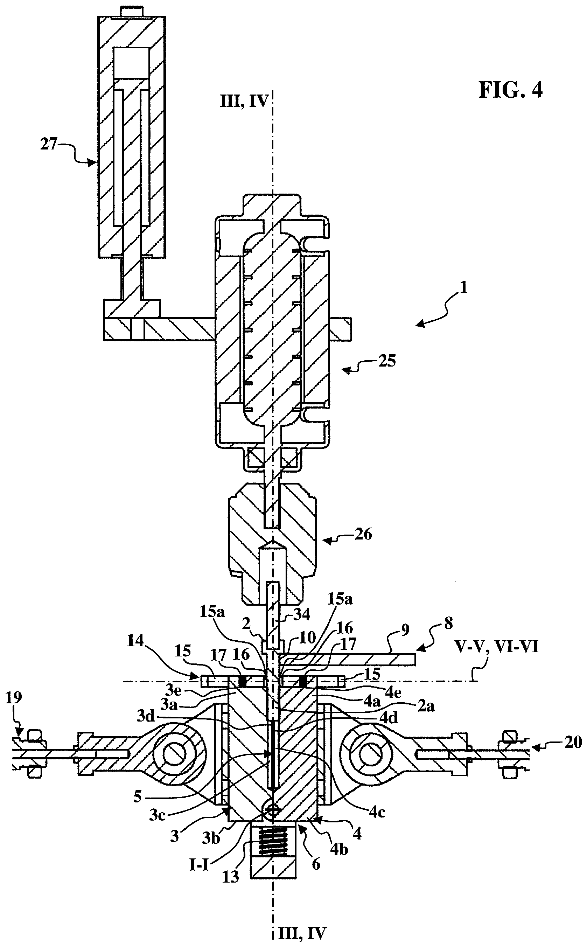

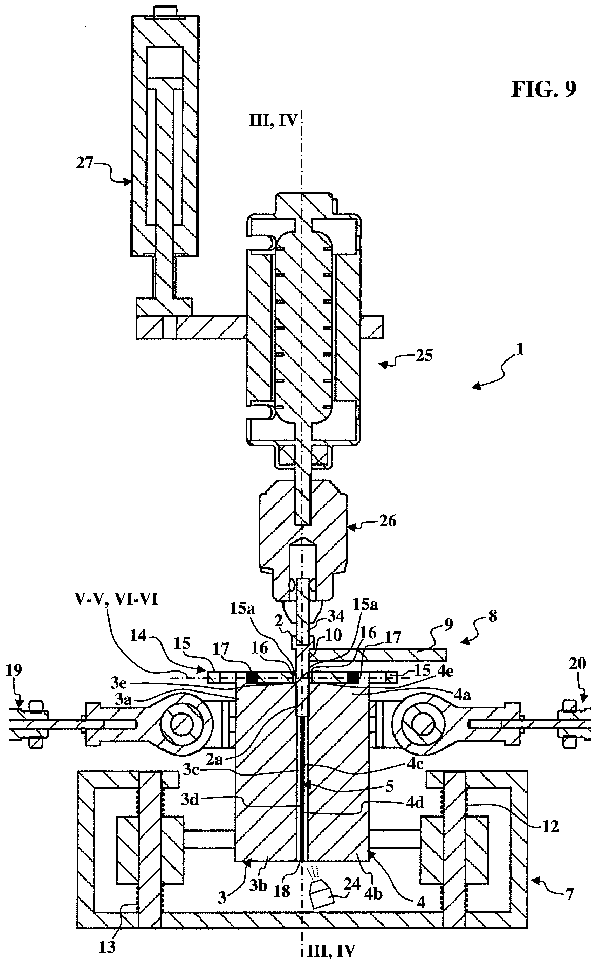

Les dispositifs de contrôle 1 illustrés sur les figures 1 à 9 comportent chacun deux mors 3 et 4 s'étendant entre une extrémité proximale 3a et 4a et une extrémité distale 3b et 4b. Les mors 3 et 4 comportent chacun une portion angulaire 3c ou 4c d'empreinte filetée cylindrique intérieure dont les paramètres de filetage intérieur sont en correspondance des paramètres de filetage dudit filetage extérieur de la vis 2 à contrôler. Les portions angulaires 3c et 4c d'empreinte filetée cylindrique sont ménagées sur des faces de travail 3d et 4d des mors 3 et 4, s'étendent entre les extrémités proximales 3a et 4a et distales 3b et 4b respectives des mors 3 et 4, et débouchent sur une face proximale 3e ou 4e des mors 3 et 4. Les mors 3 et 4 sont déplaçables entre une position de fermeture (figures 4 et 9) et une position d'ouverture (figures 1, 2, 6 et 7).

En position de fermeture (figures 4 et 9), les mors 3 et 4 sont disposés de façon à former entre eux, par complémentarité de leurs portions angulaires 3c et 4c d'empreinte filetée respective, un logement 5 débouchant fileté intérieurement sensiblement cylindrique s'étendant selon une direction axiale IV-IV. Grâce aux paramètres de filetages extérieur et intérieur en correspondance, ce logement 5 est apte à recevoir, par vissage et complémentarité de forme, et à retenir la vis 2 à contrôler.

En position d'ouverture (figures 1, 2, 6 et 7), les mors 3 et 4 sont disposés de façon à permettre l'introduction entre leurs portions angulaires 3c et 4c d'empreintes filetées respectives, par un simple mouvement de translation, d'un élément cylindrique comportant un diamètre extérieur égal à celui dudit filetage extérieur prédéfini. En l'espèce, les mors 3 et 4, une fois en position d'ouverture, permettent l'introduction de la partie filetée 2a de la vis 2 entre leurs portions angulaires 3c et 4c d'empreintes filetées respectives.

Le dispositif de contrôle 1 ne comportant qu'un premier mors 3 et un second mors 4, chaque mors 3 et 4 comporte une portion angulaire 3c ou 4c d'empreinte filetée cylindrique d'au plus la moitié d'un filetage cylindrique. Les portions angulaires 3c et 4c d'empreinte filetée cylindrique sont ménagées sur des faces de travail 3d et 4d des premier et second mors 3 et 4.

Le dispositif de contrôle 1 illustré sur les figures 1 à 5 comporte des moyens de guidage 6 à pivotement des mors 3 et 4 entre eux.

Ces moyens de guidage 6 à pivotement autorisent un déplacement relatif des mors 3 et 4 par un mouvement de pivotement autour de la direction axiale I-I.

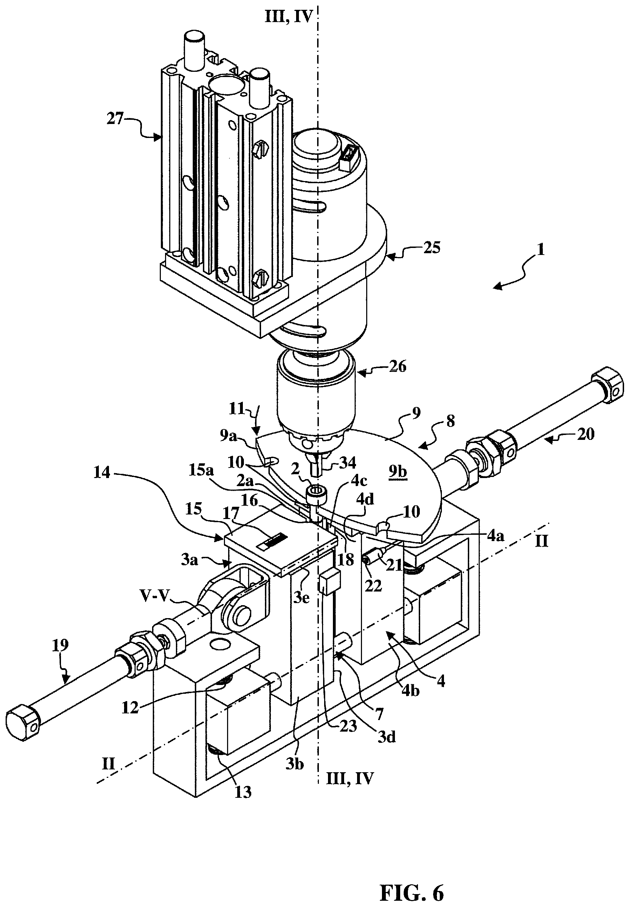

Le dispositif de contrôle 1 illustré sur les figures 6 à 9 comporte quant à lui des moyens de guidage 7 à coulissement des mors 3 et 4 entre eux. Les moyens de guidage 7 à coulissement autorisent un déplacement relatif des mors 3 et 4 par un mouvement de translation selon la direction axiale II-II.

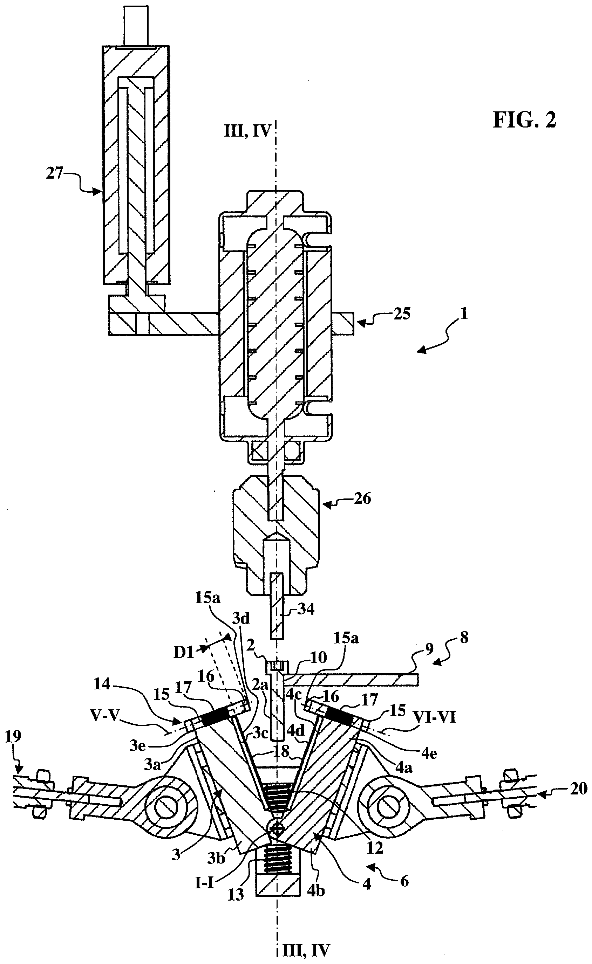

On voit plus particulièrement sur les figures 2 à 4 et 7 à 9 que les moyens de guidage 6 et 7 sont situés au voisinage des extrémités distales 3b et 4b des mors 3 et 4, à l'écart des faces proximales 3e et 4e des mors 3 et 4, et au-delà des portions angulaires 3c et 4c d'empreintes filetées cylindriques portées par les mors 3 et 4. Cette situation des moyens de guidage 6 et 7 permet à des moyens de convoyage 8 d'introduire latéralement la vis 2 entre les faces de travail 3d et 4d des mors 3 et 4.

Les moyens de convoyage 8 comprennent ici un plateau 9 à rebord 9a muni d'encoches 10 sensiblement semi-circulaires débouchant sur le rebord 9a du plateau 9. Ces encoches 10 permettent de recevoir la tige de la vis 2 tandis que la tête de la vis 2 repose sur la face supérieure 9b du plateau 9. Les moyens de convoyage 8 permettent ainsi d'amener la vis 2 puis de tenir la vis 2 entre les mors 3 et 4 selon une orientation dans laquelle la direction d'allongement III-III de la vis coïncide avec la direction axiale IV-IV du logement 5 débouchant fileté intérieurement sensiblement cylindrique formé par les portions angulaires 3c et 4c des mors 3 et 4 lorsque ces derniers sont en position de fermeture.

Le plateau 9 illustré sur les figures 1 à 4 et 6 à 9 n'est que partiellement représenté et se présente en réalité sous une forme sensiblement circulaire. Le plateau 9 est entraîné en rotation autour d'une direction axiale parallèle à la direction axiale IV-IV par des moyens d'entraînement à indexation. Cette rotation est illustrée sur les figures 1 et 6 par la flèche 11.

La vis 2 étant tenue par les moyens de convoyage 8 dans une position fixe selon la direction axiale IV-IV, il est prévu que les mors 3 et 4 puissent se déplacer en translation selon la direction axiale IV-IV vers et à l'écart des moyens de convoyage 8. Le déplacement des mors 3 et 4 vers les moyens de convoyage 8 se fait à l'encontre de premiers moyens élastiques de rappel 12 tandis que le mouvement des mors 3 et 4 à l'écart des moyens de convoyage 8 se fait à l'encontre de deuxièmes moyens élastiques de rappel 13.

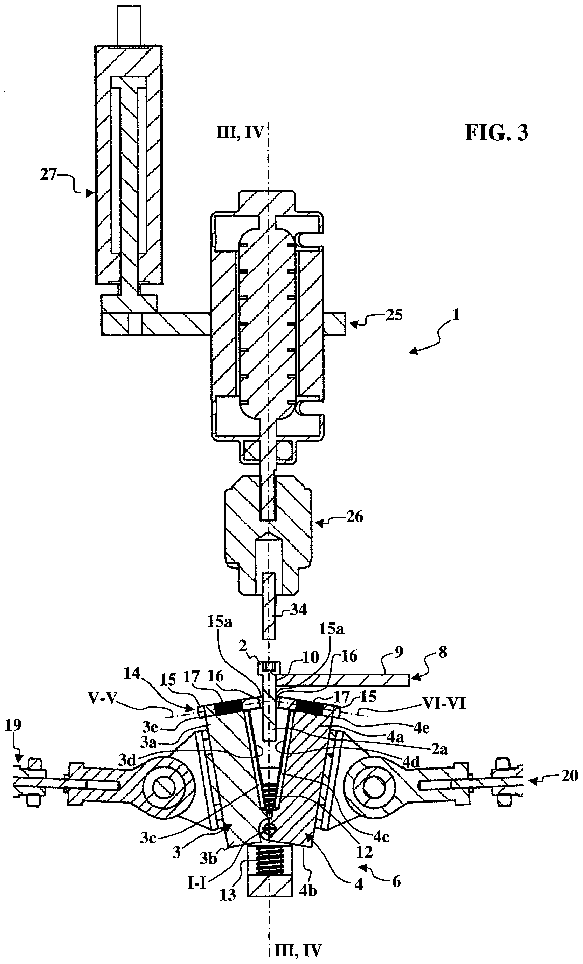

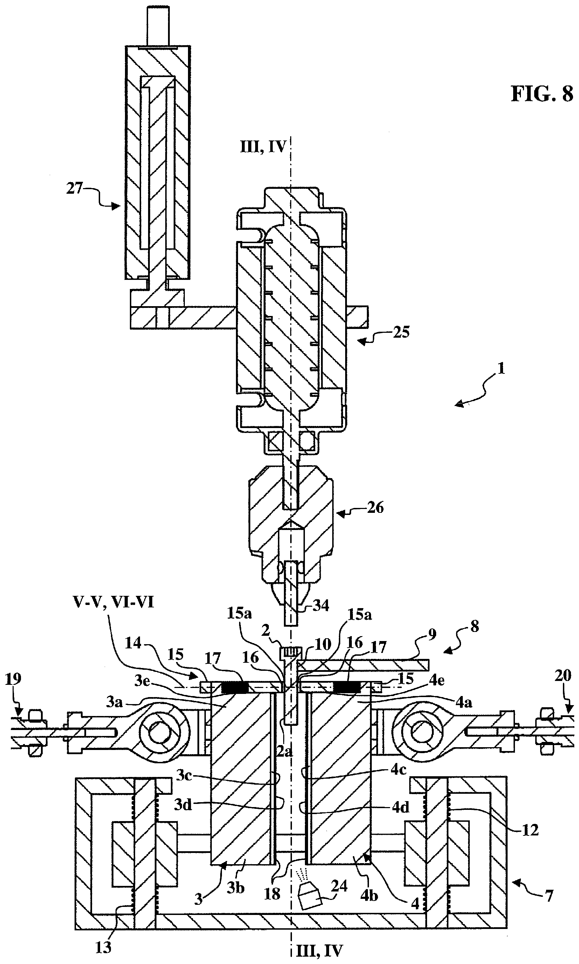

Le dispositif de contrôle 1 comprend des moyens de pré-centrage 14 de la vis 2 à contrôler par rapport aux portions angulaires 3c et 4c d'empreintes filetées cylindriques portées par les mors 3 et 4. Les moyens de pré-centrage 14 permettent de placer la vis 2 à contrôler en correspondance des portions angulaires 3c et 4c d'empreintes filetées cylindriques avant que les mors 3 et 4 ne parviennent en position de fermeture (figures 3 et 8).

De façon plus détaillée, les moyens de pré-centrage 14 comprennent, sur chacune des faces proximales 3e ou 4e du mors correspondant 3 ou 4, une pièce de centrage 15 à extrémité distale 15a munie d'une encoche 16 en V. Chaque pièce de centrage 15 est déplaçable à coulissement, le long d'une direction V-V ou VI-VI perpendiculaire à la face de travail 3d ou 4d du mors 3 ou 4. La pièce de centrage 15 est donc déplaçable à coulissement entre une position d'attente (figures 1, 2, 6 et 7), et une position de retrait (figures 4 et 9).

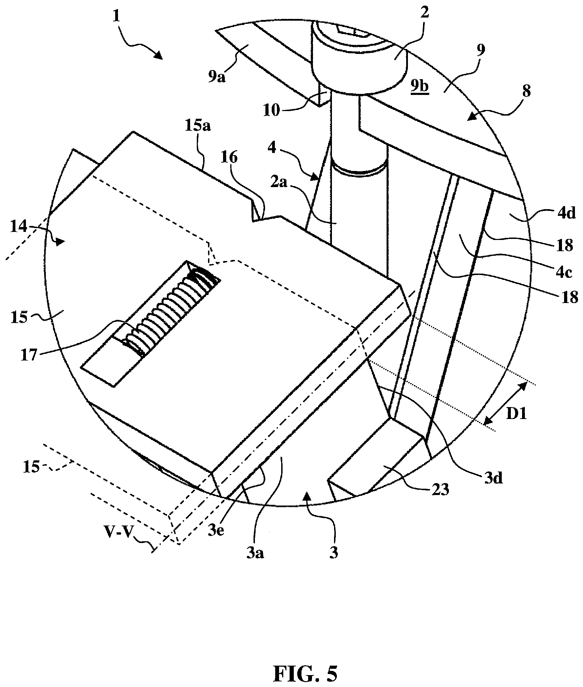

En position d'attente, la pièce de centrage 15 dépasse au-delà de la face de travail 3d ou 4d du mors 3 ou 4 correspondant, de sorte que son extrémité distale 15a est située à une première distance D1 de la face de travail 3d ou 4d du mors 3 ou 4 (figures 2, 5 et 7). En position de retrait, l'extrémité distale 15a est sensiblement située dans le plan de la face de travail 3d ou 4d du mors 3 ou 4, comme illustré en traits discontinus sur la figure 5. Les pièces de centrage 15 sont rappelées en permanence vers leur position d'attente par des troisièmes moyens élastiques de rappel 17 qui sont ici un ressort hélicoïdal plus particulièrement visible sur la figure 5 (qui est une vue de détails de la pièce de centrage 15 portée par le mors 3 du dispositif de contrôle 1 de la figure 1). La pièce de centrage 15 sur le mors 4 est agencée de façon similaire.

On voit plus particulièrement sur la figure 5 que le mors 4 comporte des chanfreins 18 reliant les bords longitudinaux de la portion angulaire d'empreinte filetée 4c à la face de travail 4d dudit mors 4. Il en est de même pour le mors 3, qui comporte des chanfreins similaires le long de la portion angulaire d'empreinte filetée 3c.

On voit plus particulièrement sur les figures 1 et 6 que le dispositif de contrôle 1 comporte des moyens d'actionnement 19 et 20 permettant de déplacer les mors 3 et 4 depuis leur position de fermeture vers leur position d'ouverture et/ou permettant de déplacer les mors 3 et 4 depuis leur position d'ouverture vers leur position de fermeture. Les moyens d'actionnement 19 et 20 peuvent par exemple comporter des vérins pneumatiques ou hydrauliques, ou des systèmes à vis à bille.

On voit également sur ces figures 1 et 6 que le dispositif de contrôle 1 comporte des moyens de capteur 21 permettant de fournir une information de fermeture lorsque les mors 3 et 4 sont effectivement en position de fermeture. De façon plus précise, les moyens de capteur 21 comportent un capteur à bouton-poussoir 22 destiné à venir en appui contre une butée 23 portée par le mors 3. Lorsque les mors 3 et 4 sont en position de fermeture, l'enfoncement du bouton-poussoir 22 par la butée 23 permet de détecter la bonne fermeture des mors 3 et 4 et de fournir l'information de fermeture.

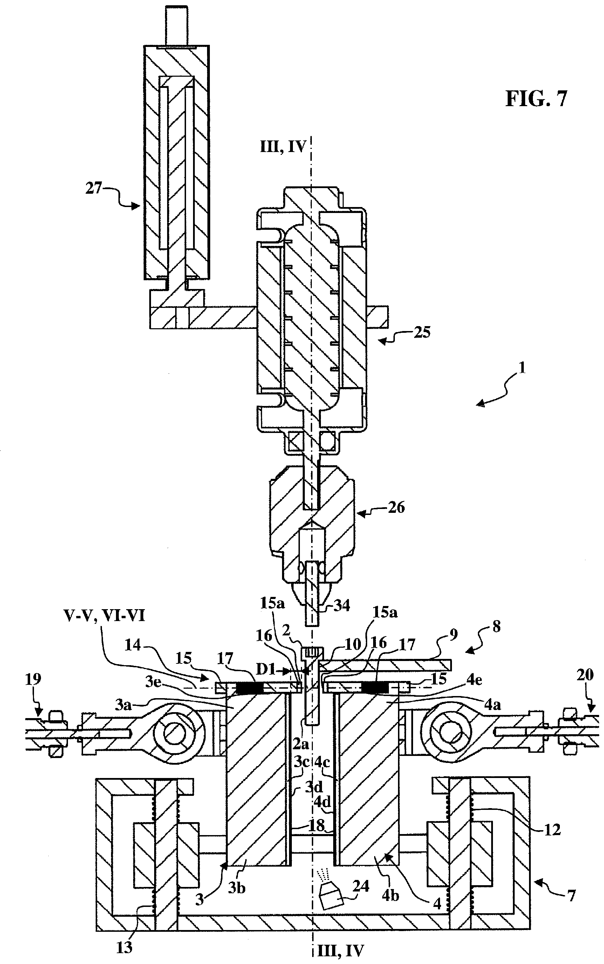

Pour éviter un encrassement des portions angulaires 3c et 4c au fur et à mesure de leur utilisation, le dispositif de contrôle 1 comporte des moyens de nettoyage 24 illustrés sur les figures 1 et 7, consistant en des moyens d'aspiration ou de projection d'un fluide (liquide ou gazeux). En alternative, des moyens de nettoyage par brossage peuvent être prévus.

Si la bonne fermeture des mors 3 et 4 permet de contrôler la géométrie du filetage de la vis 2, il est également important d'en vérifier le bon fonctionnement. Pour ce faire, le dispositif de contrôle 1 comporte des moyens de vissage et/ou dévissage 25 situés en correspondance du logement 5 débouchant fileté intérieurement sensiblement cylindrique lorsque les mors 3 et 4 sont en position de fermeture.

En l'espèce, les moyens de vissage et/ou dévissage 25 comportent un mandrin 26 permettant de générer une rotation autour de la direction axiale IV-IV pour entraîner la vis 2 en rotation dans le logement 5. Le mandrin 26 est également déplaçable à coulissement selon la direction axiale IV-IV en étant guidé par des moyens de glissière 27.

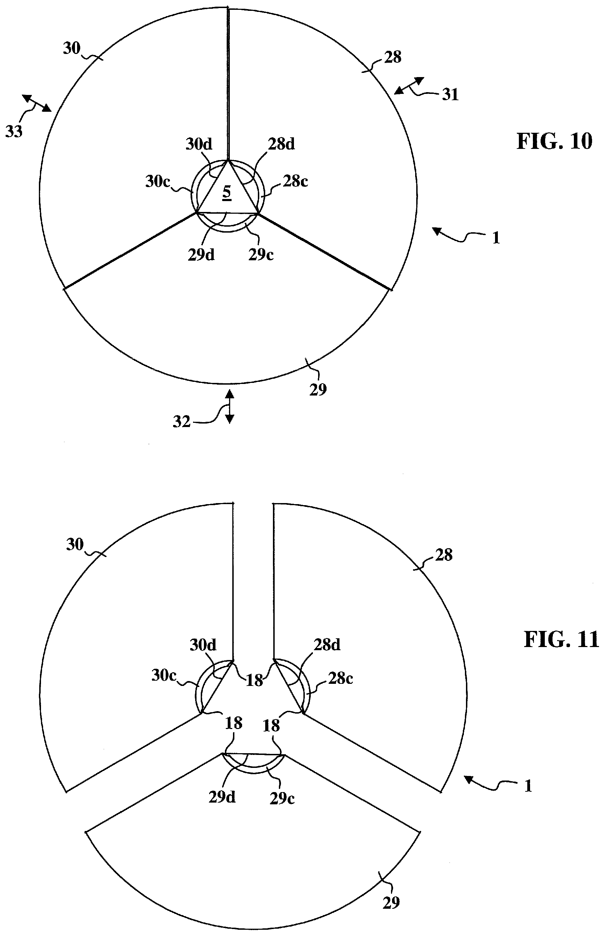

Il doit être noté que le dispositif de contrôle 1 selon l'invention peut comporter plus de deux mors 3 et 4. Le dispositif de contrôle 1 peut par exemple comporter trois mors 28, 29 et 30 comme illustré sur les figures 10 et 11. Les mors 28 à 30 comportent chacun une portion angulaire 28c, 29c ou 30c d'empreinte filetée cylindrique de diamètre prédéfini ménagée sur des faces de travail 28d, 29d et 30d des mors 28 à 30. Les bords longitudinaux des portions angulaires 28c, 29c et 30c d'empreinte filetée cylindrique sont également munies de chanfreins 18.

Dans le mode de réalisation illustré sur les figures 10 et 11, les mors 28 à 30 sont déplaçables depuis leur position de fermeture (figure 10) vers une position d'ouverture (figure 11) selon des mouvements de translation (coulissement) schématisés par les doubles flèches 31 à 33. Une disposition à pivotement des mors 28 à 30 est néanmoins possible.

Le procédé de contrôle d'une vis 2 va désormais être explicité plus en détails à l'aide des figures 1 à 5. Le contrôle d'une vis 2 à l'aide des dispositifs de contrôle 1 illustrés sur les figures 6 à 11 est similaire et ne diffère que par le nombre de mors 3, 4 et 28 à 30 et/ou les mouvements dont sont animés les mors 3, 4 et 28 à 30.

Comme illustré sur la figure 1, les mors 3 et 4 sont initialement disposés en position d'ouverture. Les moyens de convoyage 8 amènent alors une vis 2 dans l'espace laissé libre entre les mors 3 et 4. En l'espèce, le plateau 9 introduit latéralement la vis 2 entre les mors 3 et 4. L'indexation des moyens d'entraînement du plateau 9 arrête la rotation du plateau 9 lorsque la direction d'allongement III-III de la vis 2 coïncide sensiblement avec la direction axiale IV-IV.

On se trouve alors dans la position illustrée sur les figures 1 et 2. Les pièces de centrage 15 des moyens de pré-centrage 14 se trouvent en position d'attente.

On déplace alors les mors 3 et 4 vers leur position de fermeture grâce aux moyens d'actionnement 19 et 20. Lors de ce déplacement, les pièces de centrage 15 portées par les mors 3 et 4 viennent en contact avec la tige de la vis 2 selon leur encoche 16 en V. Les troisièmes moyens élastiques de rappel 17, exerçant des forces de rappel symétriques par rapport à la direction axiale IV-IV, permettent de pré-centrer la tige de la vis 2 par rapport aux mors 3 et 4 et à leurs portions angulaires 3c et 4c d'empreinte filetée cylindrique. On se trouve alors dans la configuration illustrée sur la figure 3.

On poursuit alors le déplacement des mors 3 et 4 jusqu'à amener ceux-ci dans leur position de fermeture illustrée sur la figure 4, de façon à ce que la portion filetée 2a de la vis 2 se trouve en prise dans les portions angulaires 3c et 4c d'empreinte filetée cylindrique. Lors de la poursuite du déplacement des mors 3 et 4, les pièces de centrage 15 se déplacent progressivement à l'encontre des troisièmes moyens élastiques de rappel 17, vers leur position de retrait.

Lors de la fermeture des mors 3 et 4, le bouton-poussoir 22 est pressé par la butée 23. Les moyens de capteur 21 fournissent ainsi l'information selon laquelle les mors 3 et 4 sont bien dans leur position de fermeture, ce qui signifie que la forme géométrique du filetage de la vis est a priori correcte.

Lors de la fermeture des mors 3 et 4 sur la vis 2, les sommets du filetage de la vis 2 peuvent être légèrement en décalage par rapport aux creux du filetage des portions angulaires 3c et 4c d'empreinte filetée cylindrique des mors 3 et 4. Il faut alors pouvoir assurer un léger mouvement relatif des mors 3 et 4 par rapport à la vis 2 selon la direction axiale IV-IV pour permettre aux sommets de filetage de venir en correspondance exacte des creux de filetage. Si cela nécessite un déplacement des mors 3 et 4 vers les moyens de convoyage 8, alors les mors 3 et 4 se déplacent légèrement lors de leur fermeture selon la direction axiale IV-IV, à l'encontre des premiers moyens élastiques de rappel 12. A l'inverse, s'il est nécessaire que les mors 3 et 4 se déplacent en translation selon la direction axiale IV-IV à l'écart des moyens de convoyage 8 lors de leur fermeture, cela se fait à l'encontre des deuxièmes moyens élastiques de rappel 13.

Si les mors 3 et 4 ne parviennent pas à être déplacés en position de fermeture par les moyens d'actionnement 19 et 20, cela signifie que le filetage de la vis 2 est probablement endommagé. Les mors 3 et 4 sont alors ré-ouverts et la vis 2 est alors emmenée par les moyens de convoyage 8 dans un récipient de mise au rebut.

Dans le cas où les mors 3 et 4 sont bien en position de fermeture à l'issue de leur déplacement par les moyens d'actionnement 19 et 20, le mandrin 26 est déplacé vers la vis 2 selon la direction axiale IV-IV jusqu'à ce que son outil de vissage 34 vienne en prise dans la tête de vis 2. On se trouve alors dans la configuration illustrée sur la figure 4. On applique alors à la vis 2 un couple de dévissage pour l'entraîner en rotation selon une amplitude angulaire de plusieurs tours ou d'une fraction de tour seulement. Après l'application du couple de dévissage, on peut appliquer un couple de vissage à la vis 2 selon la même amplitude angulaire.

On notera ici que la tête de vis 2 étant en appui sur le plateau 9 des moyens de convoyage 8, il est effectivement préférable d'appliquer un couple de dévissage, tendant à extraire la vis 2 hors du logement 5 avant d'appliquer un couple de vissage. Dans le cas inverse, la tête de la vis 2 viendrait frotter sur le plateau 9, ce qui viendrait fausser les résultats du contrôle de vissabilité.

Lors des opérations de vissage et/ou dévissage, on compare le couple appliqué par le mandrin 26 à la vis 2 à un couple prédéterminé. Si le couple appliqué par le mandrin 26 est supérieur au couple prédéterminé, cela signifie que la vis 2 contrôlée possède une vissabilité insatisfaisante, et elle est alors mise au rebut. Si le couple appliqué par le mandrin 26 est inférieur au couple prédéterminé, cela signifie que la vis 2 possède une vissabilité satisfaisante et elle est alors disposée, après ré-ouverture des mors 3 et 4, dans un récipient de vis 2 considérées bonnes.

Les vis 2 considérées bonnes en termes de couple de vissage et/ou dévissage ne peuvent pas s'avérer être en réalité défectueuses (en raison d'un diamètre primitif trop grand ou d'un filetage à diamètre extérieur trop grand notamment), car les moyens de capteur 21 ont préalablement fourni l'information selon laquelle les mors 3 et 4 étaient bien dans leur position de fermeture au moment où le couple de vissage ou dévissage a été appliqué lors de l'étape e).

Si une impureté se trouve prise entre les mors 3 et 4 en empêchant leur parfaite fermeture, la mauvaise fermeture des mors 3 et 4 est signalée par les moyens de capteurs 21 et on met immédiatement la vis 2 au rebut sans même procéder au contrôle de couple à l'aide de l'étape e). Les résultats du contrôle de couple seraient en effet faussés et pourraient mener à ce que des pièces défectueuses soient considérées conformes, ce qui n'est pas admissible dans le cadre d'utilisation de vis 2 exigeant une conformité certaine des vis en termes de géométrie de filetage et de couple de vissage et/ou dévissage.

On répète alors les opérations précédemment décrites pour effectuer le contrôle d'une vis 2 ultérieure. Toutefois, avant de procéder au contrôle de cette vis 2 ultérieure, on peut insuffler de l'air à haute pression entre les mors 3 et 4 par les moyens de nettoyage 24 pour s'assurer que les résultats ne soient pas faussés par un encrassement des portions angulaires 3 et 4 d'empreinte filetée cylindrique ou par des impuretés se trouvant prises entre les mors 3 et 4 et empêchant leur parfaite fermeture.

Pour limiter les risques d'usure des portions angulaires 3c et 4c d'empreinte filetée cylindrique des mors 3 et 4, les mors 3 et 4 sont fabriqués en carbure ou en alliage de carbure.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de contrôle (1) d'un élément fileté extérieurement (2) tel qu'une vis, comportant un logement (5) débouchant à filetage intérieur sensiblement cylindrique apte à recevoir par vissage et retenir ledit élément fileté extérieurement (2) à contrôler présentant un filetage extérieur prédéfini, dans lequel :
- le dispositif de contrôle (1) comporte au moins deux mors (3, 4, 28-30) s'étendant entre une extrémité proximale (3a, 4a) et une extrémité distale (3b, 4b), et comportant chacun une portion angulaire (3c, 4c, 28c-30c) d'empreinte filetée cylindrique intérieure dont les paramètres de filetage intérieur sont en correspondance des paramètres de filetage dudit filetage extérieur prédéfini,
- lesdites portions angulaires (3c, 4c, 28c-30c) d'empreinte filetée cylindrique sont ménagées sur une face de travail (3d, 4d, 28d-30d) respective des mors (3, 4, 28-30), s'étendent entre les extrémités proximale (3a, 4a) et distale (3b, 4b) respectives des mors (3, 4, 28-30), et débouchent sur une face proximale (3e, 4e) respective des mors (3, 4, 28-30),
- les mors (3, 4, 28-30) sont déplaçables entre une position de fermeture et une position d'ouverture,
- en position de fermeture, les mors (3, 4, 28-30) sont disposés de façon à former entre eux, par complémentarité de leurs portions angulaires (3c, 4c, 28c-30c) d'empreinte filetée respectives, ledit logement (5) débouchant fileté intérieurement sensiblement cylindrique,
- en position d'ouverture, les mors (3, 4, 28-30) sont disposés de façon à permettre l'introduction entre leurs portions angulaires (3c, 4c, 28c-30c) d'empreinte filetée respectives, par un simple mouvement de translation, d'un élément cylindrique comportant un diamètre extérieur égal à celui dudit filetage extérieur prédéfini, **caractérisé en ce que** le dispositif de contrôle (1) comporte des moyens de capteur (21) configurés pour fournir une information de fermeture lorsque les mors (3, 4, 28-30) sont en position de fermeture.

2. - Dispositif de contrôle (1) selon la revendication 1, **caractérisé en ce qu'**il comporte seulement un premier (3) et un second (4) mors, chaque mors (3, 4) comportant une portion angulaire (3c, 4c) d'empreinte filetée cylindrique d'au plus la moitié d'un filetage cylindrique, ménagée sur une face de travail (3d, 4d) des premier (3) et second (4) mors.

3. - Dispositif de contrôle (1) selon l'une des revendications 1 ou 2, **caractérisé en ce qu'**il comporte des moyens de guidage (6) à pivotement des mors (3, 4, 28-30) entre eux, autorisant un déplacement des mors (3, 4, 28-30) les uns par rapport aux autres par un ou plusieurs mouvements de pivotement.

4. - Dispositif de contrôle (1) selon l'une des revendications 1 ou 2, **caractérisé en ce qu'**il comporte des moyens de guidage (7) à coulissement des mors (3, 4, 28-30) entre eux, autorisant un déplacement des mors (3, 4, 28-30) les uns par rapport aux autres par un ou plusieurs mouvements de translation.

5. - Dispositif de contrôle (1) selon l'une des revendications 3 ou 4, **caractérisé en ce que** les moyens de guidage (6, 7) sont situés au voisinage des extrémités distales (3b, 4b) des mors (3, 4, 28-30), à l'écart des faces proximales (3a, 4a) des mors (3, 4, 28-30), au-delà des portions angulaires (3c, 4c, 28c-30c) d'empreinte filetée cylindrique portées par les mors (3, 4, 28-30).

6. - Dispositif de contrôle (1) selon l'une quelconque des revendications 1 à 5, **caractérisé en ce qu'**il comporte des moyens de convoyage (8) permettant d'introduire un élément fileté extérieurement (2) entre les faces de travail des mors (3, 4, 28-30).

7. - Dispositif de contrôle (1) selon l'une quelconque des revendications 1 à 6, **caractérisé en ce que** les moyens de convoyage (8) comprennent un plateau (9) à rebord (9a) muni d'encoches (10) sensiblement semi-circulaires débouchant sur le rebord (9a) du plateau (9).

8. - Dispositif de contrôle (1) selon la revendication 7, **caractérisé en ce que** :
- le plateau (9) est sensiblement circulaire,
- le plateau (9) est entraîné en rotation par des moyens d'entraînement à indexation.

9. - Dispositif de contrôle (1) selon l'une quelconque des revendications 6 à 8, **caractérisé en ce que** les mors (3, 4, 28-30) sont déplaçables en translation selon une direction axiale (IV-IV) vers les moyens de convoyage (8), à l'encontre de premiers moyens élastiques de rappel (12).

10. - Dispositif de contrôle (1) selon l'une quelconque des revendications 6 à 9, **caractérisé en ce que** les mors (3, 4, 28-30) sont déplaçables en translation selon une direction axiale (IV-IV) à l'écart des moyens de convoyage (8), à l'encontre de deuxièmes moyens élastiques de rappel (13).

11. - Dispositif de contrôle (1) selon l'une quelconque des revendications 1 à 10, **caractérisé en ce qu'**il comprend des moyens de pré-centrage (14) de l'élément fileté extérieurement (2) à contrôler par rapport aux portions angulaires (3c, 4c, 28c-30c) d'empreinte filetée cylindrique portées par les mors (3, 4, 28-30), permettant de placer l'élément fileté extérieurement (2) à contrôler en correspondance des portions angulaires (3c, 4c, 28c-30c) d'empreinte filetée cylindrique avant que les mors (3, 4, 28-30) ne parviennent en position de fermeture.

12. - Dispositif de contrôle (1) selon la revendication 11, **caractérisé en ce que** :
- les moyens de pré-centrage (14) comprennent, sur chacune des faces proximales (3e, 4e) respectives des mors (3, 4), une pièce de centrage (15) à extrémité distale (15a) munie d'une encoche (16) en V,
- chaque pièce de centrage (15) est déplaçable à coulissement sur le mors (3, 4) correspondant, selon une direction (V-V ; VI-VI) perpendiculaire à la face de travail (3d, 4d, 28d-30d) du mors correspondant, entre une position d'attente et une position de retrait,
- en position d'attente, la pièce de centrage (15) dépasse au-delà de la face de travail (3d, 4d, 28d-30d) du mors (3, 4, 28-30) correspondant, de sorte que son extrémité distale (15a) est située à une première distance (D1) de la face de travail (3d, 4d, 28d-30d) du mors (3, 4, 28-30),
- en position de retrait, l'extrémité distale (15a) de la pièce de centrage (15) est sensiblement située dans le plan de la face de travail (3d, 4d, 28d-30d) du mors (3, 4, 28-30),
- la pièce de centrage (15) est rappelée en permanence vers sa position d'attente par des troisièmes moyens élastiques de rappel (17).

13. - Dispositif de contrôle (1) selon l'une quelconque des revendications 1 à 12, **caractérisé en ce que** chaque mors (3, 4, 28-30) comporte des chanfreins (18) reliant les bords longitudinaux de la portion angulaire (3c, 4c, 28c-30c) d'empreinte filetée à la face de travail (3d, 4d, 28d-30d) dudit mors (3, 4, 28-30).

14. - Dispositif de contrôle (1) selon l'une quelconque des revendications 1 à 13, **caractérisé en ce qu'**il comporte des moyens d'actionnement (19-20) permettant de déplacer les mors (3, 4, 28-30) depuis leur position de fermeture vers leur position d'ouverture et/ou permettant de déplacer les mors (3, 4, 28-30) depuis leur position d'ouverture vers leur position de fermeture.

15. - Dispositif de contrôle (1) selon l'une quelconque des revendications 1 à 14, **caractérisé en ce qu'**il comporte des moyens de nettoyage (24) des portions angulaires (3c, 4c, 28c-30c) d'empreinte filetée cylindrique, de préférence par brossage et/ou aspiration et/ou projection d'un fluide.

16. - Dispositif de contrôle (1) selon l'une quelconque des revendications 1 à 15, **caractérisé en ce qu'**il comporte des moyens de vissage et/ou dévissage (25) situés en correspondance du logement (5) débouchant fileté intérieurement sensiblement cylindrique lorsque les mors (3, 4, 28-30) sont en position de fermeture.

17. - Procédé de contrôle d'un élément fileté extérieurement (2) tel qu'une vis, **caractérisé en ce qu'**il comporte les étapes successives suivantes :
a) fournir un dispositif de contrôle (1) d'un élément fileté extérieurement (2) tel qu'une vis à filetage extérieur prédéfini, dans lequel :
- au moins deux mors (3, 4, 28-30) s'étendent entre une extrémité proximale (3a, 4a) et une extrémité distale (3b, 4b), et comportent chacun une portion angulaire (3c, 4c, 28c-30c) d'empreinte filetée cylindrique intérieure dont les paramètres de filetage intérieur sont en correspondance des paramètres de filetage dudit filetage extérieur prédéfini,
- lesdites portions angulaires (3c, 4c, 28c-30c) d'empreinte filetée cylindrique sont ménagées sur une face de travail (3d, 4d, 28d-30d) respective des mors (3, 4, 28-30) et débouchent sur une face proximale (3e, 4e) respective des mors (3, 4, 28-30),
- les mors (3, 4, 28-30) sont déplaçables entre une position de fermeture et une position d'ouverture,
- en position de fermeture, les mors (3, 4, 28-30) sont disposés de façon à former entre eux, par complémentarité de leurs portions angulaires (3c, 4c, 28c-30c) d'empreinte filetée respectives, un logement (5) débouchant fileté intérieurement sensiblement cylindrique apte à recevoir par vissage et retenir ledit élément fileté extérieurement à contrôler comportant un diamètre extérieur égal audit diamètre prédéfini,
- en position d'ouverture, les mors (3, 4, 28-30) sont disposés de façon à permettre l'introduction, entre leurs portions angulaires (3c, 4c, 28c-30c) d'empreinte filetée respectives, d'un élément cylindrique comportant un diamètre extérieur égal à celui dudit filetage extérieur prédéfini,
- des moyens de capteur (21) configurés pour fournir une information de fermeture lorsque les mors (3, 4, 28-30) sont en position de fermeture,
b) disposer les mors (3, 4, 28-30) en position d'ouverture,
c) introduire un élément fileté extérieurement (2) entre les mors (3, 4, 28-30), sensiblement en correspondance des portions angulaires (3c, 4c, 28c-30c) d'empreinte filetée cylindrique des mors (3, 4, 28-30),
d) déplacer les mors (3, 4, 28-30) vers leur position de fermeture, de façon à ce que l'élément fileté extérieurement (2) se trouve en prise dans les portions angulaires (3c, 4c, 28c-30c) d'empreinte filetée cylindrique des mors (3, 4, 28-30),
e) si les moyens de capteur (21) fournissent l'information selon laquelle les mors (3, 4, 28-30) sont dans leur position de fermeture, appliquer un couple de vissage ou dévissage à l'élément fileté extérieurement (2) pris entre les mors (3, 4, 28-30).

18. - Procédé de contrôle selon la revendication 17, **caractérisé en ce que**, lors de l'étape d), on procède à un pré-centrage de l'élément fileté extérieurement (2) à contrôler par rapport aux portions angulaires (3c, 4c, 28c-30c) d'empreinte filetée cylindrique portées par les mors (3, 4, 28-30), de façon à placer l'élément fileté extérieurement (2) à contrôler en correspondance des portions angulaires (3c, 4c, 28c-30c) d'empreinte filetée cylindrique avant que les mors (3, 4, 28-30) ne parviennent en position de fermeture.

19. - Procédé de contrôle selon l'une des revendications 17 ou 18, **caractérisé en ce que**, après l'étape d) et avant l'étape e), on vérifie que les mors (3, 4, 28-30) sont en position de fermeture.

20. - Procédé de contrôle selon l'une quelconque des revendications 17 à 19, **caractérisé en ce que**, lors de l'étape e), on applique un couple de dévissage.

21. - Procédé de contrôle selon la revendication 20, **caractérisé en ce que**, lors de l'étape e), après l'application du couple de dévissage, on applique un couple de vissage à l'élément fileté extérieurement (2).

22. - Procédé de contrôle selon l'une quelconque des revendications 17 à 21, **caractérisé en ce que**, lors de l'étape e), on compare le couple de vissage appliqué à un couple de vissage prédéterminé et/ou on compare le couple de dévissage appliqué à un couple de dévissage prédéterminé.

23. - Procédé de contrôle selon l'une quelconque des revendications 17 à 22, **caractérisé en ce que**, entre les contrôles successifs de deux éléments filetés extérieurement (2), on nettoie les portions angulaires (3c, 4c, 28c-30c) d'empreinte filetée cylindrique.

## Patentansprüche

1. Prüfvorrichtung (1) für Maschinenelemente (2) mit Außengewinde wie beispielsweise von Schrauben, umfassend einen im Wesentlichen zylindrischen, durchgehenden Sitz (5) mit Innengewinde, der dazu dient, das zu prüfende und mit einem vorbestimmten Außengewinde versehene Maschinenelement (2) durch Schraubeingriff aufzunehmen und zu halten, wobei:
- die Prüfvorrichtung (1) wenigstens zwei Spannbacken (3, 4, 28-30) aufweist, die sich zwischen einem proximalen Ende (3a, 4a) und einem distalen Ende (3b, 4b) erstrecken und von denen jede einen Winkelabschnitt (3c, 4c, 28c-30c) mit zylindrischem Innengewinde hat, dessen Parameter den Parametern des vorbestimmten Außengewindes entsprechen,
- die Winkelabschnitte (3c, 4c, 28c-30c) mit zylindrischem Innengewinde in eine entsprechende Arbeitsseite (3d, 4d, 28d-30d) der Spannbacken (3, 4, 28-30) eingearbeitet sind, die sich zwischen dem proximalen Ende (3a, 4a) und dem distalen Ende (3b, 4b) der Spannbacken (3, 4, 28-30) erstreckt und in eine entsprechende proximale Seite (3e, 4e) der Spannbacken (3, 4, 28-30) übergeht,
- die Spannbacken (3, 4, 28-30) zwischen einer Schließstellung und einer Öffnungsstellung verstellbar sind,
- die Spannbacken (3, 4, 28-30) in der Schließstellung so zueinander angeordnet sind, dass sie zwischen sich über ihre einander ergänzenden Winkelabschnitte (3c, 4c, 28c-30c) mit entsprechendem Innengewinde den im Wesentlichen zylindrischen, durchgehenden Sitz (5) bilden,
- die Spannbacken (3, 4, 28-30) in der Öffnungsstellung so angeordnet sind, dass zwischen ihre mit Gewinde versehenen Winkelabschnitte (3c, 4c, 28c-30c) durch eine einfache Translationsbewegung ein zylindrisches Maschinenelement einführbar ist, dessen Außendurchmesser gleich demjenigen des vorbestimmten Außengewindes ist,
**dadurch gekennzeichnet, dass** die Prüfvorrichtung (1) Messaufnehmer (21) hat, die so ausgebildet sind, dass sie eine Information über den Schließzustand liefern, wenn sich die Spannbacken (3, 4, 28-30) in ihrer Schließstellung befinden.

2. Prüfvorrichtung (1) nach Anspruch 1, **dadurch gekennzeichnet, dass** diese nur eine erste Spannbacke (3) und eine zweite Spannbacke (4) hat, von denen jede Spannbacke (3, 4) einen zylindrischen Winkelabschnitt (3c, 4c) hat, der sich über höchstens die Hälfte eines zylindrischen Gewindes erstreckt und in eine Arbeitsseite (3d, 4d) der ersten Spannbacke (3) und der zweiten Spannbacke (4) eingearbeitet ist.

3. Prüfvorrichtung (1) nach Anspruch 1 oder 2, **dadurch gekennzeichnet, dass** diese Schwenk-Führungsmittel (6) für die Spannbacken (3, 4, 28-30) aufweisen, die eine Verstellung der Spannbacken (3, 4, 28-30) zueinander durch eine oder mehrere Schwenkbewegungen zulassen.

4. Prüfvorrichtung (1) nach Anspruch 1 oder 2, **dadurch gekennzeichnet, dass** diese Führungsmittel (7) bei der Verschiebebewegung der Spannbacken (3, 4, 28-30) zueinander aufweisen, die eine Verstellung der Spannbacken (3, 4, 28-30) zueinander durch eine oder mehrere Translationsbewegungen zulassen.

5. Prüfvorrichtung (1) nach Anspruch 3 oder 4, **dadurch gekennzeichnet, dass** die Führungsmittel (6, 7) in der Nähe der distalen Enden (3b, 4b) der Spannbacken (3, 4, 28-30) mit Abstand von den proximalen Seiten (3a, 4a) der Spannbacken (3, 4, 28-30) außerhalb der Winkelabschnitte (3c, 4c, 28c-30c) mit zylindrischem Gewinde angeordnet sind, die an den Spannbacken (3, 4, 28-30) vorgesehen sind.

6. Prüfvorrichtung (1) nach einem der Ansprüche 1 bis 5, **dadurch gekennzeichnet, dass** diese Zuführmittel (8) zum Einführen eines mit Außengewinde versehenen Maschinenelementes (2) zwischen die Arbeitsseiten der Spannbacken (3, 4, 28-30) aufweist.

7. Prüfvorrichtung (1) nach einem der Ansprüche 1 bis 6, **dadurch gekennzeichnet, dass** die Zuführmittel (8) eine Platte (9) mit einem Rand (9a) haben, der im Wesentlichen halbkreisförmige Öffnungen (10) hat, die in den Rand (9a) der Platte (9) münden.

8. Prüfvorrichtung (1) nach Anspruch 7, **dadurch gekennzeichnet, dass**:
- die Platte (9) im Wesentlichen kreisförmig ist und
- die Platte (9) durch Mittel mit Indexantrieb in Drehung versetzt wird.

9. Prüfvorrichtung (1) nach einem der Ansprüche 6 bis 8, **dadurch gekennzeichnet, dass** die Spannbacken (3, 4, 28-30) in einer Axialrichtung (IV-IV) durch Translationsbewegung in Richtung auf die Zuführmittel (8) gegen die Wirkung erster elastischer Rückführmittel (12) verschiebbar sind.

10. Prüfvorrichtung (1) nach einem der Ansprüche 6 bis 9, **dadurch gekennzeichnet, dass** die Spannbacken (3, 4, 28-30) durch Translation in einer Axialrichtung (IV-IV) von den Zuführmittel (8) gegen die Wirkung zweiter elastischer Rückführmittel (13) verstellbar sind.

11. Prüfvorrichtung (1) nach einem der vorhergehenden Ansprüche 1 bis 10, **dadurch gekennzeichnet, dass** diese Vorzentrierungsmittel (14) für das zu prüfende und mit Außengewinde versehene Maschinenelement (2) relativ zu den Winkelabschnitten (3c, 4c, 28c-30c) der Spannbacken (3, 4, 28-30) aufweist, die so ausgebildet sind, dass das zu prüfende und mit zylindrischem Außengewinde versehene Maschinenelement (2) relativ zu den zylindrischen Winkelabschnitten (3c, 4c, 28c-30c) platzierbar ist, bevor die Spannbacken (3, 4, 28-30) in die Schließstellung gelangen.

12. Prüfvorrichtung (1) nach Anspruch 11, **dadurch gekennzeichnet, dass**:
- die Vorzentrierungsmittel (14) an jeder proximalen Seite (3e, 4e) der zugeordneten Spannbacke (3, 4) ein Zentrierstück (15) mit einem distalen Ende (15a) haben, das einen V-förmigen Schlitz (16) aufweist,
- jedes Zentrierstück (15) auf der Spannbacke (3, 4) in einer Richtung (V-V; VI-VI) rechtwinklig zur Arbeitsseite (3d, 4d, 28d, 30d) der entsprechenden Spannbacke zwischen einer Bereitschaftsstellung und einer Rückzugsstellung verschiebbar ist,
- in der Bereitschaftsstellung das Zentrierstück (15) über die Arbeitsseite (3d, 4d, 28d-30d) der entsprechenden Spannbacke (3, 4, 28-30) so vorsteht, dass ihr distales Ende (15a) einen ersten Abstand (D1) von der Arbeitsseite (3d, 4d, 28d-30d) der Spannbacke (3, 4, 28-30) hat,
- in der Rückzugsstellung das distale Ende (15a) des Zentrierstücks (15) im Wesentlichen in der Ebene der Arbeitsseite (3d, 4d, 28d-30d) der Spannbacke (3, 4, 28-30) liegt,
- das Zentrierstück (15) durch dritte elastische Rückzugsmittel (17) permanent in Richtung auf seine Bereitschaftsstellung beaufschlagt wird.

13. Prüfvorrichtung (1) nach einem der vorhergehenden Ansprüche 1 bis 12, **dadurch gekennzeichnet, dass** jede Spannbacke (3, 4, 28-30) abgefaste Kanten (18) hat, welche die Längsränder der mit Gewinde versehenen Winkelabschnitte (3c, 4c, 28c-30c) mit der Arbeitsseite (3d, 4d, 28d-30d) der Spannbacke (3, 4, 28-30) verbinden.

14. Prüfvorrichtung (1) nach einem der vorhergehenden Ansprüche 1 bis 13, **dadurch gekennzeichnet, dass** diese Antriebsmittel (19-20) aufweisen, um die Spannbacken (3, 4, 28-30) aus ihrer Schließstellung in ihre Öffnungsstellung und/oder aus ihrer Öffnungsstellung in Richtung ihrer Schließstellung zu verschieben.

15. Prüfvorrichtung (1) nach einem der vorhergehenden Ansprüche 1 bis 14, **dadurch gekennzeichnet, dass** diese Mittel (24) zum Reinigen der mit zylindrischem Gewinde versehenen Winkelabschnitte (3c, 4c, 28c-30c) aufweisen, vorzugsweise zum Bürsten und/oder Absaugen und/oder Besprühen.

16. Prüfvorrichtung (1) nach einem der vorhergehenden Ansprüche 1 bis 15, **dadurch gekennzeichnet, dass** diese Mittel (25) zum Einschrauben und/oder Ausschrauben aufweist, die im Bereich des durchgehenden, im Wesentlichen zylindrischen und ein Innengewinde aufweisenden Sitzes (5) angeordnet sind, wenn sich die Spannbacken (3, 4, 28-30) in der Schließstellung befinden.

17. Verfahren zum Prüfen eines mit Außengewinde versehenen Maschinenelementes (2) wie beispielsweise einer Schraube, **gekennzeichnet durch** die nachfolgenden Arbeitsschritte:
a) Bereitstellen einer Vorrichtung (1) zum Prüfen eines mit Außengewinde versehenen Maschinenelementes (2) wie beispielsweise einer Schraube mit vorbestimmtem Außengewinde, wobei:
- wenigstens zwei Spannbacken (3, 4, 28-30) sich zwischen einem proximalen Ende (3a, 4a) und einem distalen Ende (3b, 4b) erstrecken, die beide einen Winkelabschnitt (3c, 4c, 28c-30c) mit zylindrischem Innengewinde haben, dessen Parameter den Gewindeparametern des vorbestimmten Außengewindes entsprechen,
- die mit zylindrischem Gewinde versehenen Winkelabschnitte (3c, 4c, 28c-30c) in eine Arbeitsseite (3d, 4d, 28d-30d) der zugehörigen Spannbacken (3, 4, 28-30) eingearbeitet und an einer proximalen Seite (3e, 4e) der Spannbacke (3, 4, 28-30) offen sind,
- die Spannbacken (3, 4, 28-30) zwischen einer Schließstellung und einer Öffnungsstellung verstellbar sind,
- die Spannbacken (3, 4, 28-30) in der Schließstellung so angeordnet sind, dass sie zwischen sich in Ergänzung ihrer mit Gewinde versehenen Winkelabschnitte (3c, 4c, 28c-30c) einen im Wesentlichen zylindrischen, durchgehenden Sitz (5) mit Innengewinde bilden, der dazu dient, das zu prüfende und mit Außengewinde versehene Maschinenelement durch Schraubeingriff aufzunehmen und zu halten, dessen Außendurchmesser dem vorbestimmten Außendurchmesser entspricht,
- die Spannbacken (3, 4, 28-30) in der Öffnungsstellung so angeordnet sind, dass zwischen ihre mit Gewinde versehenen Winkelabschnitte (3c, 4c, 28c-30c) ein zylindrisches Maschinenelement eingesetzt werden kann, dessen Außendurchmesser dem Außendurchmesser des vorbestimmten Außengewindes entspricht,
- Messaufnehmer (21) vorgesehen sind, die so ausgebildet sind, dass sie eine Information zur Schließstellung liefern, wenn sich die Spannbacken (3, 4, 28-30) in ihrer Schließstellung befinden,
b) Verstellen der Spannbacken (3, 4, 28-30) in ihre Öffnungsstellung,
c) Einführen eines mit Außengewinde versehenen Maschinenelementes (2) zwischen die Spannbacken (3, 4, 28-30) im Wesentlichen im Bereich der mit zylindrischem Gewinde versehenen Winkelabschnitte (3c, 4c, 28c-30c) der Spannbacken (3, 4, 28-30),
d) Verstellen der Spannbacken (3, 4, 28-30) in ihre Schließstellung, so dass das mit Außengewinde versehene Maschinenelement (2) von den mit zylindrischem Gewinde versehenen Winkelabschnitten (3c, 4c, 28c-30c) der Spannbacken (3, 4, 28-30) erfasst wird,
e) Aufbringen eines Momentes zum Einschrauben oder Abschrauben des Bauelementes (2) mit Außengewinde zwischen den beiden Spannbacken (3, 4, 28-30), wenn die Messaufnehmer (21) eine Information liefern, wonach sich die Spannbacken (3, 4, 28-30) in ihrer Schließstellung befinden.

18. Verfahren nach Anspruch 17, **dadurch gekennzeichnet, dass** beim Arbeitsschritt d) das zu prüfende und mit Außengewinde versehene Maschinenelement (2) relativ zu den mit zylindrischem Gewinde versehenen Winkelabschnitten (3c, 4c, 28c-30c) der Spannbacken (3, 4, 28-30) vorzentriert wird, so dass das zu prüfende und mit Außengewinde versehene Maschinenelement (2) platziert wird, bevor die Spannbacken (3, 4, 28-30) in ihre Schließstellung gelangen.

19. Verfahren nach Anspruch 17 oder 18, **dadurch gekennzeichnet, dass** nach dem Arbeitsschritt d) und vor dem Arbeitsschritt e) überprüft wird, ob sich die Spannbacken (3, 4, 28-30) in ihrer Schließstellung befinden.

20. Verfahren nach einem der Ansprüche 17 bis 19, **dadurch gekennzeichnet, dass** beim Arbeitsschritt e) ein Moment zum Abschrauben aufgebracht wird.

21. Verfahren nach Anspruch 20, **dadurch gekennzeichnet, dass** beim Arbeitsschritt e) nach dem Aufbringen eines Abschraubmomentes ein Moment zum Einschrauben des mit Außengewinde versehenen Maschinenelementes (2) aufgebracht wird.

22. Verfahren nach einem der Ansprüche 17 bis 21, **dadurch gekennzeichnet, dass** beim Arbeitsschritt e) das aufgebrachte Moment zum Einschrauben mit einem vorbestimmten Moment zum Einschrauben und/oder das aufgebrachte Moment zum Abschrauben mit einem vorbestimmten Moment zum Abschrauben verglichen wird.

23. Verfahren nach einem der Ansprüche 17 bis 22, **dadurch gekennzeichnet, dass** zwischen aufeinander folgenden Prüfschritten für zwei mit Außengewinde versehenen Maschinenelementen (2) deren mit Zylindergewinde versehenen Winkelabschnitte (3c, 4c, 28c-30c) gereinigt werden.

## Claims

1. Inspection device (1) for inspecting an externally threaded element (2) such as a screw, comprising an open-ended housing (5) with an internal screw thread that is substantially cylindrical able to receive by screwing and to retain the said externally threaded element (2) that is to be inspected and that has a predefined external screw thread, in which device
- the inspection device (1) comprises at least two jaws (3, 4, 28-30) extending between a proximal end (3a, 4a) and a distal end (3b, 4b) and each comprising an angular portion (3c, 4c, 28c-30c) of internal cylindrical threaded die cavity the interior screw threading parameters of which are aligned to the screw threading parameters of the said predefined external screw thread,
- the said angular portions (3c, 4c, 28c-30c) of cylindrical threaded die cavity are formed on a respective working face (3d, 4d, 28d-30d) of the jaws (3, 4, 28-30), extend between the respective proximal (3a, 4a) and distal (3b, 4b) ends of the jaws (3, 4, 28-30) and open onto a respective proximal face (3e, 4e) of the jaws (3, 4, 28-30),
- the jaws (3, 4, 28-30) can be moved between a closed position and an open position,
- in the closed position, the jaws (3, 4, 28-30) are arranged in such a way as to form between them, because of the complementary nature of their respective angular portions (3c, 4c, 28c-30c) of threaded die cavity, the said substantially cylindrical internally threaded open-ended housing (5),
- in the open position, the jaws (3, 4, 28-30) are arranged in such a way as to allow a cylindrical element having an outside diameter equal to that of the said predefined external screw thread to be introduced in a simple translational movement between their respective angular portions (3c, 4c, 28c-30c) of threaded die cavity,
**characterized in that** the inspection device (1) comprises sensor means (21) configured to supply closure information when the jaws (3, 4, 28-30) are in the closed position.

2. Inspection device (1) according to Claim 1, **characterized in that** it comprises only a first (3) and a second (4) jaw, each jaw (3, 4) comprising an angular portion (3c, 4c) of cylindrical threaded die cavity representing at most half of a cylindrical screw thread, formed on a working face (3d, 4d) of the first (3) and second (4) jaws.

3. Inspection device (1) according to one of Claims 1 and 2, **characterized in that** it comprises guide means (6) guiding the pivoting of the jaws (3, 4, 28-30) relative to one another, allowing the jaws (3, 4, 28-30) to move relative to one another in one or more pivoting movements.

4. Inspection device (1) according to one of Claims 1 and 2, **characterized in that** it comprises guide means (7) guiding the sliding of the jaws (3, 4, 28-30) relative to one another, allowing the jaws (3, 4, 28-30) to move relative to one another in one or more translational movements.

5. Inspection device (1) according to one of Claims 3 and 4, **characterized in that** the guide means (6, 7) are situated near the distal ends (3b, 4b) of the jaws (3, 4, 28-30), away from the proximal faces (3a, 4a) of the jaws (3, 4, 28-30), beyond the angular portions (3c, 4c, 28c-30c) of cylindrical threaded die cavity borne by the jaws (3, 4, 28-30).

6. Inspection device (1) according to any one of Claims 1 to 5, **characterized in that** it comprises conveying means (8) allowing a threaded element to be introduced externally (2) between the working faces of the jaws (3, 4, 28-30).

7. Inspection device (1) according to any one of Claims 1 to 6, **characterized in that** the conveying means (8) comprise a plate (9) with a rim (9a) equipped with substantially semi-circular cutouts (10) opening onto the rim (9a) of the plate (9).

8. Inspection device (1) according to Claim 7, **characterized in that**:
- the plate (9) is substantially circular,
- the plate (9) is turned by indexed drive means.

9. Inspection device (1) according to any one of Claims 6 to 8, **characterized in that** the jaws (3, 4, 28-30) can be moved translationally in an axial direction (IV-IV) towards the conveying means (8), against the action of first elastic return means (12).

10. Inspection device (1) according to any one of Claims 6 to 9, **characterized in that** the jaws (3, 4, 28-30) can be moved translationally in an axial direction (IV-IV) away from the conveying means (8), against the action of second elastic return means (13).

11. Inspection device (1) according to any one of Claims 1 to 10, **characterized in that** it comprises means (14) of pre-centring the externally threaded element (2) that is to be inspected with respect to the angular portions (3c, 4c, 28c-30c) of cylindrical threaded die cavity borne by the jaws (3, 4, 28-30) allowing the externally threaded element (2) that is to be inspected to be positioned in register with the angular portions (3c, 4c, 28c-30c) of cylindrical threaded die cavity before the jaws (3, 4, 28-30) arrive in the closed position.

12. Inspection device (1) according to Claim 11, **characterized in that**:
- the pre-centring means (14) comprise, on each of the respective proximal faces (3e, 4e) of the jaws (3, 4) a centring piece (15) the distal end (15a) of which is equipped with a V-shaped cutout (16),
- each centring piece (15) is able to move by sliding on the corresponding jaw (3, 4) in a direction (V-V; VI-VI) perpendicular to the working face (3d, 4d, 28d-30d) of the corresponding jaw, between a standby position and a withdrawn position,
- in the standby position, the centring piece (15) protrudes beyond the working face (3d, 4d, 28d-30d) of the corresponding jaw (3, 4, 28-30) so that its distal end (15a) is situated a first distance (D1) away from the working face (3d, 4d, 28d-30d) of the jaw (3, 4, 28-30),
- in the withdrawn position, the distal end (15a) of the centring piece (15) is substantially situated in the plane of the working face (3d, 4d, 28d-30d) of the jaw (3, 4, 28-30),
- the centring piece (15) is constantly returned towards its standby position by third elastic return means (17).

13. Inspection device (1) according to any one of Claims 1 to 12, **characterized in that** each jaw (3, 4, 28-30) comprises chamfers (18) connecting the longitudinal edges of the angular portion (3c, 4c, 28c-30c) of threaded die cavity to the working face (3d, 4d, 28d-30d) of the said jaw (3, 4, 28-30).

14. Inspection device (1) according to any one of Claims 1 to 13, **characterized in that** it comprises actuating means (19-20) allowing the jaws (3, 4, 28-30) to be moved from their closed position to their open position and/or allowing the jaws (3, 4, 28-30) to be moved from their open position to their closed position.

15. Inspection device (1) according to any one of Claims 1 to 14, **characterized in that** it comprises cleaning means (24) for cleaning the angular portions (3c, 4c, 28c-30c) of cylindrical threaded die cavity, preferably by brushing and/or suction and/or spraying of a fluid.

16. Inspection device (1) according to any one of Claims 1 to 15, **characterized in that** it comprises screwing and/or unscrewing means (25) situated in register with the substantially cylindrical internally threaded open-ended housing (5) when the jaws (3, 4, 28-30) are in the closed position.

17. Method for inspecting an externally threaded element (2) such as a screw, **characterized in that** it comprises the following successive steps:
a) providing an inspection device (1) for inspecting an externally threaded element (2) such as a screw with a predefined external screw thread, in which:
- at least two jaws (3, 4, 28-30) extend between a proximal end (3a, 4a) and a distal end (3b, 4b) and each comprise an angular portion (3c, 4c, 28c-30c) of internal cylindrical threaded die cavity the interior screw threading parameters of which are aligned to the screw threading parameters of the said predefined external screw thread,
- the said angular portions (3c, 4c, 28c-30c) of cylindrical threaded die cavity are formed on a respective working face (3d, 4d, 28d-30d) of the jaws (3, 4, 28-30) and open onto a respective proximal face (3e, 4e) of the jaws (3, 4, 28-30),
- the jaws (3, 4, 28-30) can be moved between a closed position and an open position,
- in the closed position, the jaws (3, 4, 28-30) are arranged in such a way as to form between them, because of the complementary nature of their respective angular portions (3c, 4c, 28c-30c) of threaded die cavity, a substantially cylindrical internally threaded open-ended housing (5), able to receive by screwing and to retain the said externally threaded element that is to be inspected that has an outside diameter equal to the said predefined diameter,
- in the open position, the jaws (3, 4, 28-30) are arranged in such a way as to allow a cylindrical element having an outside diameter equal to that of the said predefined external screw thread to be introduced between their respective angular portions (3c, 4c, 28c-30c) of threaded die cavity,
- sensor means (21) configured to supply closure information when the jaws (3, 4, 28-30) are in the closed position,
b) placing the jaws (3, 4, 28-30) in the open position,
c) introducing an externally threaded element (2) between the jaws (3, 4, 28-30) substantially in register with the angular portions (3c, 4c, 28c-30c) of cylindrical threaded die cavity of the jaws (3, 4, 28-30),
d) moving the jaws (3, 4, 28-30) towards their closed position so that the externally threaded element (2) finds itself gripped in the angular portions (3c, 4c, 28c-30c) of cylindrical threaded die cavity of the jaws (3, 4, 28-30),
e) if the sensor means (21) provide information that the jaws (3, 4, 28-30) are in their closed position, applying a screwing or unscrewing torque to the externally threaded element (2) gripped between the jaws (3, 4, 28-30).

18. Inspection method according to Claim 17, **characterized in that**, during step d), the externally threaded element (2) that is to be inspected is pre-centred with respect to the angular portions (3c, 4c, 28c-30c) of cylindrical threaded die cavity borne by the jaws (3, 4, 28-30) so as to place the externally threaded element (2) that is to be inspected in register with the angular portions (3c, 4c, 28c-30c) of cylindrical threaded die cavity before the jaws (3, 4, 28-30) reach the closed position.

19. Inspection method according to one of Claims 17 and 18, **characterized in that**, after step d) and before step e), a check is made to determine whether the jaws (3, 4, 28-30) are in the closed position.

20. Inspection method according to any one of Claims 17 to 19, **characterized in that**, during step e), an unscrewing torque is applied.

21. Inspection method according to Claim 20, **characterized in that**, during step e) and after the unscrewing torque has been applied, a screwing torque is applied to the externally threaded element (2).

22. Inspection method according to any one of Claims 17 to 21, **characterized in that**, during step e), the screwing torque applied is compared against a predetermined screwing torque and/or the unscrewing torque applied is compared against a predetermined unscrewing torque.

23. Inspection method according to any one of Claims 17 to 22, **characterized in that**, between the successive inspections of two externally threaded elements (2), the angular portions (3c, 4c, 28c-30c) of cylindrical threaded die cavity are cleaned.
